(19) Europäisches Patentamt
European Patent Office
Office européen des brevets

(11) Veröffentlichungsnummer: **0 344 403**
**A1**

(12) **EUROPÄISCHE PATENTANMELDUNG**

(21) Anmeldenummer: 89101630.5

(51) Int. Cl.⁴: **F16J 15/10**

(22) Anmeldetag: 31.01.89

(30) Priorität: 26.05.88 DE 3817875

(43) Veröffentlichungstag der Anmeldung:
06.12.89 Patentblatt 89/49

(84) Benannte Vertragsstaaten:
AT BE CH DE ES FR GB GR IT LI LU NL SE

(71) Anmelder: W.L. Gore & Associates GmbH
Hermann-Oberth-Strasse 22
D-8011 Putzbrunn(DE)

(72) Erfinder: Rüsch, Hans-Jörg
Egerweg 8
D-8012 Ottobrunn(DE)
Erfinder: Gutsmiedl, Heinrich
Soinweg 11
D-8201 Flintsbach(DE)

(74) Vertreter: Klunker . Schmitt-Nilson . Hirsch
Winzererstrasse 106
D-8000 München 40(DE)

(54) Dichtschnur aus Polytetrafluorethylen.

(57) Um bei der Verwendung von Dichtschnüren aus extrudiertem, gerecktem Polytetrafluoräthylen Leckagen, die durch wegfließendes Dichtungsmaterial entstehen weitestgehend auszuschließen, die insbesondere bei Flanschdichtungen mit großen Schraubenkräften und schmalen Dichtflächen auftreten, enthält die Dichtschnur einen partikelförmigen Füllstoff aus Glasmaterial. Obschon dieser Füllstoff die speziellen Eigenschaften von Dichtschnüren aus gerecktem PTFE nicht beeinträchtigt, verdoppelt sich die Restdicke einer zusammengepreßten Dichtschnur. Dies ist besonders wünschenswert bei Flanschdichtungen, die nicht unerhebliche Verwerfungen aufweisen. Solche Verwerfungen können weniger als zuvor dazu führen, daß das Material an Stellen geringen Abstandes zwischen den Dichtflächen ausweicht.

## Dichtschnur aus Polytetrafluorethylen

Die Erfindung betrifft eine Dichtschnur aus extrudiertem, gerecktem mikroporösem Polytetrafluorethylen.

Extrudiertes mikroporöses Polytetrafluorethylen weist eine Reihe bevorzugter Eigenschaften auf. Besonderes Merkmal solchen Materials ist seine Mikrostruktur,die gekennzeichnet ist durch über Fibrillen miteinander verbundene Knoten.

Es wurde bereits vorgeschlagen, aus solchem Material Dichtungen herzustellen, insbesondere Dichtschnüre aus extrudiertem und gerecktem PTFE.

Die PTFE-Dichtungen wurden für verschiedenste Zwecke eingesetzt.

Neben der thermischen Ausdehnung bei Temperaturschwankungen besteht ein Problem bei solchen Dichtschnüren in einem für viele Anwendungszwecke nicht akzeptablen Fließverhalten. Wird die Dichtschnur z.B. bei einem Deckel zum Verschließen eines unter Druck stehenden Behälters eingesetzt, so wird sie beim Aufschrauben des Deckels gegen eine Dichtfläche gepreßt und dadurch einer bestimmten Flächenpressung unterworfen. Dabei weicht das PTFE quer zur Längsrichtung der Dichtschnur aus. Das Ausmaß dieses Ausweichens hängt von dem jeweiligen Dichtungsmaterial ab.

Da insbesondere bei größeren Behälteröffnungen die Flansche am Deckelrand nicht unerhebliche Verwerfungen aufweisen, wird das Dichtungsmaterial an einigen Stellen sehr stark zusammengepreßt, weicht aufgrund ungünstigen Kaltfließverhaltens seitlich aus und hinterläßt schlecht abgedichtete Stellen, die leicht zu Leckstellen werden können. Diese potentiellen Leckstellen sind Stellen, an denen Behälteröffnungsrand und Deckelrand aufgrund von praktisch nicht vermeidbaren Materialunebenheiten sehr eng benachbart sind. Ist das Kaltfließverhalten der Dichtung zu hoch, so kommt es dazu, daß sich Deckel und Behälter praktisch berühren, da das Dichtungsmaterial ausweicht, so daß die Dichtungsflächen möglicherweise beschädigt werden.

Man verwendet für Dichtungen für Behälter und Rohrleitungen auch nicht-schnurförmige, aus plattenförmigem Material ausgestanzte Dichtungen. Diese müssen allerdings entsprechend der Form der Dichtfläche ausgestanzt werden. Auch derartige Dichtungen unterliegen beträchtlichen Verformungen bei Flächenpressungen, mit der Gefahr, daß es häufig zu Undichtigkeiten kommt.

Der Erfindung liegt die Aufgabe zugrunde, eine Dichtschnur der eingangs genannten Art anzugeben, die ein günstiges Kaltfließverhalten, eine relativ geringe thermische Ausdehnung und dennoch eine für Dichtschnüre geeignete Elastizität aufweist.

Gelöst wird diese Aufgabe durch einen Anteil eines partikelförmigen oder faserförmigen Füllstoffs in dem PTFE-Material.

Es hat sich gezeigt, daß aufgrund des partikelförmigen Füllstoffs, bei dem es sich vorzugsweise um Glasmaterial handelt, hervorragende Eigenschaften der Dichtschnur erzielt werden. Vergleicht man eine gefüllte PTFE-Dicht-mit einer Dichtschnur ohne Füllstoff, so zeigt sich, daß bei gleicher Flächenpressung die Restdicke der ererfindungsgemäßen Dichtschnur etwa doppelt so groß ist. Die thermische Ausdehnung ist bei einer Temperaturschwankung von z.B. 200° C in einer gefüllten Dichtschnur ebenfalls wesentlich geringer. Das Fließverhalten ist bei der den Füllstoff enthaltenden Dichtschnur wesentlich günstiger. Bei einer bestimmten Temperatur und einem bestimmten Druck nimmt die erfindungsgemäße Dichtschnur bereits nach einer wesentlich kürzeren Zeit einen stabilen Zustand ein.

Es hat sich gezeigt, daß die erfindungsgemäße Dichtschnur bei vergleichbarer Flächenpressung bedeutend weniger komprimiert wird, d.h. die Restdicke ist - wie oben gesagt - etwa doppelt so groß. Eine (mögliche) Erklärung für dieses Phänomen ist, daß es zu Brückenbildungen zwischen den Füllstoff-Partikeln kommt. Wenn eine bestimmte Komprimierung erreicht ist, sind in dem Material derart viele Partikelbrücken entstanden, daß eine weitere Komprimierung nur mit erheblich größerer Pressung erreicht werden könnte. Durch die Brückenbildung wird das gepreßte Dichtungsmaterial stabilisiert.

Ein bedeutender Vorteil der erfindungsgemäßen Dichtschnur ist es, daß die Elastizität praktisch genauso groß ist wie bei einer füllstofflosen Dichtschnur aus extrudiertem gerecktem PTFE. Das bedeutet: die Handhabbarkeit der erfindungsgemäßen Dichtschnur ist ebenso günstig wie bei den ungefüllten Dichtschnüren. Aufgrund der höheren Restdicke werden aber die eingangs erläuterten Nachteile des Standes der Tecknik vermieden.

Es kommen verschiedene Füllstoffe in Betracht, insbesondere eignet sich jedoch Glaspulver. Die Menge des Füllstoffanteiles beträgt 5 bis 65 Gew.-% ,vorzugsweise 30 bis 50 Gew.-%.

Aufgrund der besonderen Eigenschaften der erfindungsgemäßen Dichtschnur wird diese vorzugsweise bei statischen Dichtungen mit großen Schraubenkräften eingesetzt. Bei derartigen Dichtungen sind die Dichtschnüre hohen Flächenpressungen ausgesetzt. Dies trifft praktisch für sämtliche Stahlflansche zu, die der einschlägigen DIN entsprechen.

Das Beimengen von Füllstoffen zu einem Dichtungsmaterial ist zwar an sich bekannt, nicht jedoch bei extrudiertem, gerecktem PTFE. Ein besonderes Merkmal des gereckten PTFE-Materials ist dessen mikroporöse Struktur mit einer Orientierung der die Knoten verbindenden Fibrillen. Im einfachsten Fall liegt in dem Material nur eine einzige Orientierung vor, bei Schnüren verläuft diese Orientierung in Längsrichtung der Schnüre. Aufgrund der speziellen Materialstruktur war kaum anzunehmen, daß ein - an sich bekannter - Füllstoffzuschlag die insbesondere bei Dichtungen gewünschten Eigenschaften des gereckten PTFE-Materials nicht zerstören würde. Überraschenderweise hat sich aber nun gezeigt, daß trotz dem Füllstoff die wichtigsten Eigenschaften des Materials erhalten bleiben, dazu aber der beträchtliche Vorteil kommt, daß die Dichtschnur bei vergleichbaren Flächenpressungen eine beträchtlich höhere Restdicke aufweist und dadurch die Gefahr von Leckagen erheblich verringert ist.

## Beispiel

Durch Extrudieren wurde aus Polytetrafluorethylen, dem Glaspulver beigefügt war, eine Schnur rechteckigen Querschnitts hergestellt, die extrudierte Schnur wurde in an sich bekannter Weise gereckt und dann unter Verringerung der Querschnittshöhe der Schnur vorgepreßt. Der Anteil des Glaspulvers betrug dabei 50 Gew.-%.

In einem Versuch wurde das Kaltfließverhalten bei konstanter Belastung gemessen. Der Versuch wurde bei einer Temperatur von 150° durchgeführt. Die Flächenpressung betrug 13 N/mm². Die Dichtung besaß eine Breite von 22 mm und eine Höhe von 1,6 mm im Endzustand.

Nach Ablauf von einer Stunde wurde eine Höhenverringerung von 3μm gemessen, nach 10 Stunden eine Höhenverringerung von 5,5μm und nach 40 Stunden eine Höhenverringerung von 10,5 μm. nicht weiter.

## Vergleichsbeispiel:

In einem ähnlichen Versuch wurde eine vergleichbare Dichtschnur aus extrudiertem, gerecktem, mikroporösem PTFE-Material (dem Füllstoff) untersucht. Nach einer Stunde betrug die Höhendifferenz der Dichtschnur 13,5 μm, nach 10 Stunden 19 μm und nach 40 Stunden 22 μm. Diese Werte sind wesentlich schlechter bei der erfindungsgemäßen Dichtschnur.

Die Flächenpressung betrug 8,7 N/mm². Die Dichtung besaß eine Breite von 28,5 mm und eine Höhe von 0,7 mm im Endzustand.

Beim Vergleich der Restdicken zeigte sich, daß die Restdicke der erfindungsgemäßen Dichtschnur etwa doppelt so groß war wie bei der Vergleich-Dichtschnur. Geprüft wurde mit dem Creep-Relaxation-Test nach ASTM F38-Methode B. Bei ansonsten gleichen Versuchsparametern wurden bei der gefüllten Dichtschnur einerseits und der Dichtschnur ohne Füllstoff andererseits vergleichbare Werte gemessen, wobei sich doch bei der gefüllten Dichtschnur die doppelte Restdicke ergab.

Die Vorteile der gefüllten Dichtschnur zeigen sich auch bei einem Vergleich der Formfaktoren C. Der Formfaktor ist das Verhältnis von Breite zur Höhe des Dichtungsprofiles. Dieser Wert soll möglichst gering sein, d.h. bei einer großen Höhe soll die Breite relativ klein sein. Bei der gefüllten Dichtschnur ergab sich ein Formfaktor C von 13,7, bei der Vergleichs-Dichtschnur ein Formfaktor C von 40,7.

## Ansprüche

1. Dichtschnur aus extrudiertem, gerecktem, mikroporösem Polytetrafluorethylen (PTFE), **gekennzeichnet** durch einen Anteil eines partikelförmigen oder faserförmigen Füllstoffs.

2. Dichtschnur nach Anspruch 1, dadurch **gekennzeichnet,** daß der Füllstoff Glasmaterial ist.

3. Dichtschnur nach Anspruch 1, dadurch **gekennzeichnet,** daß der Füllstoff Kohlenstoff ist, insbesondere in Form von Grafit.

4. Dichtschnur nach einem der Ansprüche 1 bis 3, dadurch **gekennzeichnet,** daß der Füllstoffanteil 5 bis 65 Gew.-%, vorzugsweise 30 bis 50 Gew.-% beträgt.

5. Dichtschnur nach einem der Ansprüche 1 bis 4, **gekennzeichnet** durch die Verwendung als statische Dichtung, z. B. als Flanschdichtung für Behälteröffnungen und Rohrleitungen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 143 338  (GORE & CO.)<br>* Zusammenfassung * | 1 | F 16 J  15/10 |
| A |  | 5 | |
|  | --- | | |
| Y | US-A-3 642 976  (BUCKLEY et al.)<br>* Zusammenfassung; Spalte 1, Zeilen 52-69; Spalte 2, Zeilen 14-18 * | 1 | |
| A |  | 2-4 | |
|  | ----- | | |

RECHERCHIERTE
SACHGEBIETE (Int. Cl.4)

F 16 J

Der vorliegende Recherchenbericht wurde für alle Patentansprüche erstellt

| Recherchenort | Abschlußdatum der Recherche | Prüfer |
|---|---|---|
| DEN HAAG | 11-09-1989 | NARMINIO A. |